# EUROPEAN PATENT SPECIFICATION

(11) **EP 3 125 147 B1**
(45) Date of publication and mention of the grant of the patent: **03.06.2020**
(21) Application number: 16181024.7
(22) Date of filing: 25.07.2016
(51) Int. Cl.: G06F 21/56, H04L 29/06, H04W 12/12

(54) **SYSTEM AND METHOD FOR IDENTIFYING A PHISHING WEBSITE**
SYSTEM UND VERFAHREN ZUR IDENTIFIZIERUNG EINER PHISHING-WEBSITE
SYSTÈME ET PROCÉDÉ D'IDENTIFICATION D'UN SITE WEB D'HAMEÇONNAGE

(30) Priority: 27.07.2015 CH 10872015
(43) Date of publication of application: 01.02.2017
(73) Proprietor: Swisscom AG, 3050 Bern (CH)
(72) Inventor: Ulrich, Bürgi, 3050 Bern (CH); Florian, Angehrn, 3050 Bern (CH)
(74) Representative: Mirza, Akram Karim

(56) References cited:
- US-A1- 2009 157 675
- US-A1- 2012 158 626
- US-B1- 8 205 258
- US-B1- 9 043 894

## Description

### Technical Field

The invention relates to an automatic phishing website detection method and system.

### Background Art

As described for example in US 8438642 the term "phishing" generally refers to the concept of tricking a computer user into submitting personal information to a bogus website. Phishing also refers to the techniques used to trick users. The personal information, such as generally private identifying information, login information for online banking, credit card numbers, and other valuable information, is often used to commit fraud, including identity theft.

One common phishing tactic is to send an email message or instant message to a large number of users. The identity of the message sender and the message content can be arranged to look like the source is a legitimate business or person. The message may indicate that the user needs to resubmit some personal data so that the business can continue to serve the user. The email message can contain a link to a bogus website that may look virtually identical to the pages offered by the legitimate site. Because links are difficult to read and can use foreign characters that look like normal characters to the user, users can be fooled into visiting the bogus Website and providing valuable personal data.

Protection from phishing can be provided through user awareness and education enabling the recipient of a phishing communication to distinguish between genuine and fraudulent messages. This approach is however resource intensive and often unsuccessful. As phishing attacks become more and more sophisticated, even experienced users struggle to distinguish between such messages.

Network companies, Internet Service Providers (ISPs), browser providers and others are therefore very active in developing automated tools and methods to detect phishing attempts prior to the user' s exposure to a fraudulent message in order to prevent the phishing attack or at least to warn a user that the received message could be a phishing attempt. Given the large number and the varied and constantly evolving nature of phishing attacks it is a very complex task to provide entirely machine based systems and methods capable of detecting attacks with a satisfactory degree of accuracy.

To date the most common automated protection against phishing are based on an analysis and comparison of the Universal Resource Locator (URL) as requested by a link within the phishing email or message. Either the URL is compared with entries in database, such as Phishtank at https://www.phishtank.com/ of known phishing sites ("black list") or with the legitimate target sites. The analysis and comparison can be limited to the URL as such or to an analysis of the phishing website, i.e. by comparison of elements of the phishing website with legitimate target websites etc.

Some of the known approaches use textual features (e.g. company name, domain name) to identify phishing webpages that match a certain protectable webpage. Relatively few use visual features. Some of them compares complete screenshots of websites. Others also consider using sub parts of the webpage (i.e. text block, images, logos) for identification. The extracted features are used in the known methods as a critical part of the classification process.

Examples of known systems and methods for detecting phishing attacks can be found in the above cited '642 patent, as well as in other documents including US 9043894, US 20120158626, US 8205258, US 20090157675, US 7630987, US 8468597, US 8635666, US 20140033307, US 20060080735. WO 2008146292, EP 1681825, WHITE, Josua S., et al. A Method For The Automated Detection Of Phishing Websites through both site characteristics and image analysis. Proc. SPIE 8408 - Cyber Sensing 2012. 07.05.2012, vol.8408 and RAMACHANDRAN, Anirudh, et al. Fishing for Phishing from the Network Stream. SCS Technical Report GT-CS-08-08. 2008.

However it is often not sufficient to solve the problem of automating the task of identifying phishing websites through a single method. For maximal protection it is often necessary to combine several detection methods.

### Summary of invention

A system and/or method is provided for the detection of phishing attacks and/or websites suspected of phishing , substantially as shown in and/or described in connection with at least one of the figures, and as set forth more completely in the claims.

These and other advantages, aspects and novel features of the present invention, as well as details of an illustrated embodiment thereof, will be more fully understood from the following description and drawings.

### Brief description of drawings

- Fig. 1: is a block diagram showing components of an exemplary phishing detection system; and
- Fig. 2: illustrates a network traffic pattern in form of a diagram.

### Description of embodiments

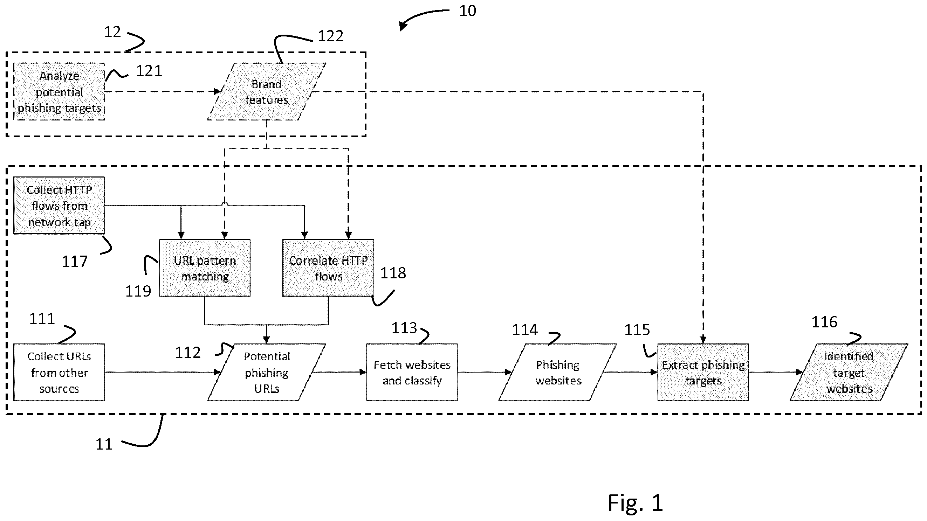

An exemplary phishing detection system 10 is shown in Fig. 1. The system can operate in a first mode using the components and steps 11 linked by solid arrows or in a second mode further including the components and steps 12 linked by dashed arrows. In the first mode no knowledge of the target web sites of the phishing attack is assumed whereas the second mode makes use of features extracted from known target web sites.

Starting with the components and steps 11 of the first mode, the system can include a URL collection tool 111, a storage for potential phishing URLs 112, a web site fetcher and classifier 113, a phishing web side storage 114, a feature extractor 115 and an identified target storage 116. The web site filtering element can receive input from a URL pattern matching device 119 and/or from a HTTP flow correlator 118, both of which in turn can receive input from a network flow monitor 117.

The components and steps 12 of the second mode can include a phishing target analyser 121 and a feature provider 122, which can provide input to any of above URL pattern matching device 119, the HTTP flow correlator 118 and the feature extractor 115.

In a typical operation of the above system the URL collection tool 111 is used to collect URLs from sources such as emails, messages or manual inputs. The collected URLs are transmitted to the storage for potential phishing URLs 112 which stores potential phishing URLs. The websites requested by those URLs which have been identified as potential phishing URLs can be classified using the web site fetcher and classifier 113. The web site fetcher and classifier employs methods known per se to download suspicious web sites and assets, i.e. elements or features, thereof. The downloaded contents is analysed and compared to known and trained pattern indicating a phishing web site. Once a phishing website is identified it is stored in the by the web site storage 114, the feature extractor 115 can be used to extract and analyze salient features of the downloaded website and for example compared with features as provided by the feature provider 122 to identify with the targeted web site and to store the identified targeted web sites in the target storage116.

In addition or as an alternative to the above flow of steps, the phishing detection system 10 as shown in Fig. 1 includes further methods and means for detecting potential phishing sites. The alternative or additional methods make use of the network flow monitor 117 to monitor network traffic. The network flow monitor 117 can generate a log of the network requests including the IP addresses of the requesting site and of the requested sites and time stamps indicative of the time of the requests. In case of the network flow not being encrypted, e.g. an http: traffic, plaintext URLs can be included in the log. In case the network flow is monitored for a single network device, the IP address of such a device can be assumed to be known and/or unchanged and hence does not have to be monitored by the network flow monitor 117.

The log generated by the network flow monitor 117 is used as input to the network flow correlator 118 and/or to the URL pattern matching engine 119 for the plaintext URLs. The latter identifies potential phishing URLs through analysis of the plaintext URLs and allows to add identified URLs to the list of potential phishing URLs as stored in the storage for potential phishing URL 112.

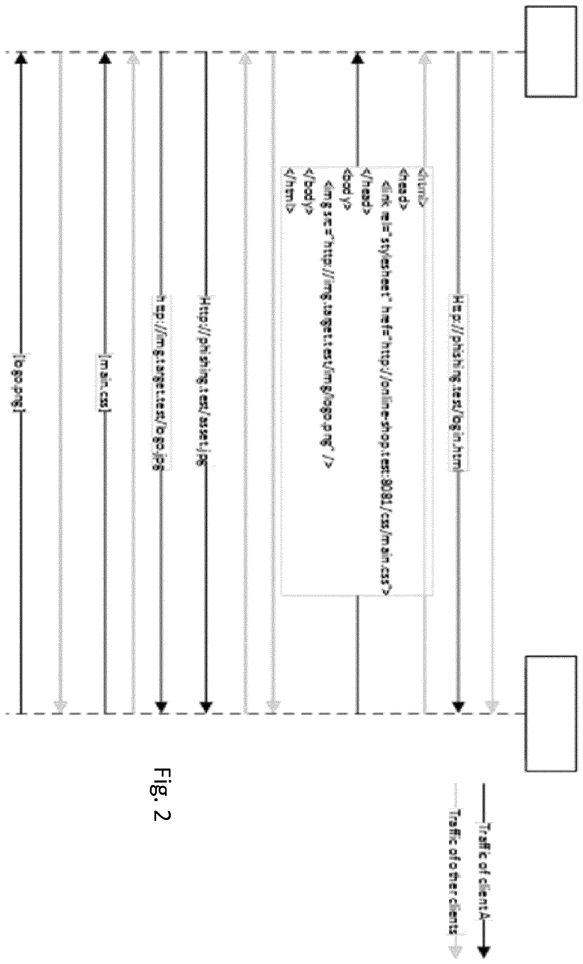

The network flow correlator 118 can perform a correlation analysis to identify correlated requests and responses within the network flow indicative of a phishing attack. In the following such correlations or patterns in the network flow are described in greater detail making reference to Fig. 2.

Some phishing website are known to not host copies of the target website' s resources themselves but instead directly link to the original assets of the targeted website. These assets include typically resources like the Favicon, images, or CSS files. Opening a phishing site of such nature in a web browser results in a very specific behavior, which can be monitored at network level as shown in Fig. 2.

In Fig. 2 the traffic from and to a specific user, client or site as identified by its IP address ("client A") is emphasised using black arrow within the multitude of other requests and responses in the network traffic. An example of network traffic as represented in Fig. 2 in form of a network flow log of time stamped network traffic events is illustrated by Table 1, which protocols 0.032616 seconds of network flow at network level, i.e., as for example passing through a network or gateway server of an Internet Service Provider (ISP).

**Table 1**

| **Time [s]** | **Source** | **Destination** | **HTTP Header** |
|---|---|---|---|
| 0 | 192.168.3.3 | 10.22.22.22 | |
| 0.000085 | 10.22.22.22 | 192.168.3.3 | |
| 0.000545 | 192.168.3.3 | 10.22.22.22 | |
| 0.000956 | 192.168.3.3 | 10.22.22.22 | |
| 0.001053 | 10.22.22.22 | 192.168.3.3 | |
| 0.001056 | 172.16.55.5 | 10.88.88.88 | |
| 0.00108 | 10.88.88.88 | 172.16.55.5 | |
| 0.001097 | 172.16.55.5 | 10.88.88.88 | |
| 0.001178 | 172.16.55.5 | 10.88.88.88 | GET phishing.test /login.html |
| 0.001188 | 10.88.88.88 | 172.16.55.5 | |
| 0.001798 | 10.22.22.22 | 192.168.3.3 | |
| 0.002409 | 10.22.22.22 | 192.168.3.3 | 200 OK |
| 0.003057 | 192.168.3.3 | 10.22.22.22 | |
| 0.003908 | 10.88.88.88 | 172.16.55.5 | |
| 0.003923 | 172.16.55.5 | 10.88.88.88 | |
| 0.00394 | 192.168.3.3 | 10.22.22.22 | |
| 0.00394 | 10.88.88.88 | 172.16.55.5 | |
| 0.003943 | 172.16.55.5 | 10.88.88.88 | |
| 0.003958 | 10.88.88.88 | 172.16.55.5 | |
| 0.00396 | 172.16.55.5 | 10.88.88.88 | |
| 0.003967 | 10.88.88.88 | 172.16.55.5 | |
| 0.003969 | 172.16.55.5 | 10.88.88.88 | |
| 0.003973 | 10.22.22.22 | 192.168.3.3 | |
| 0.003978 | 10.88.88.88 | 172.16.55.5 | |
| 0.00398 | 172.16.55.5 | 10.88.88.88 | |
| 0.003991 | 10.88.88.88 | 172.16.55.5 | |
| 0.003992 | 172.16.55.5 | 10.88.88.88 | |
| 0.003998 | 10.88.88.88 | 172.16.55.5 | |
| 0.004 | 172.16.55.5 | 10.88.88.88 | |
| 0.004023 | 10.88.88.88 | 172.16.55.5 | 200 OK |
| 0.004287 | 172.16.55.5 | 10.88.88.88 | |
| 0.004294 | 10.88.88.88 | 172.16.55.5 | |
| 0.017247 | 172.16.55.5 | 10.22.22.22 | |
| 0.017254 | 10.22.22.22 | 172.16.55.5 | |
| 0.017261 | 172.16.55.5 | 10.22.22.22 | |
| 0.018097 | 172.16.55.5 | 10.22.22.22 | GET target.test /css/main.css |
| 0.018119 | 10.22.22.22 | 172.16.55.5 | |
| 0.018336 | 10.22.22.22 | 172.16.55.5 | |
| 0.01834 | 172.16.55.5 | 10.22.22.22 | |
| 0.018352 | 10.22.22.22 | 172.16.55.5 | |
| 0.018354 | 172.16.55.5 | 10.22.22.22 | |
| 0.018368 | 10.22.22.22 | 172.16.55.5 | |
| 0.01837 | 172.16.55.5 | 10.22.22.22 | |
| 0.018377 | 10.22.22.22 | 172.16.55.5 | |
| 0.018379 | 172.16.55.5 | 10.22.22.22 | |
| 0.018387 | 10.22.22.22 | 172.16.55.5 | |
| 0.018389 | 172.16.55.5 | 10.22.22.22 | |
| 0.018399 | 10.22.22.22 | 172.16.55.5 | |
| 0.0184 | 172.16.55.5 | 10.22.22.22 | |
| 0.018406 | 10.22.22.22 | 172.16.55.5 | 200 OK |
| 0.018407 | 172.16.55.5 | 10.22.22.22 | |
| 0.018646 | 172.16.55.5 | 10.22.22.22 | |
| 0.018652 | 10.22.22.22 | 172.16.55.5 | |
| 0.018754 | 172.16.55.5 | 10.22.22.22 | |
| 0.018759 | 10.22.22.22 | 172.16.55.5 | |
| 0.018763 | 172.16.55.5 | 10.22.22.22 | |
| 0.018837 | 172.16.55.5 | 10.22.22.22 | GET target.test /img/logo.png |
| 0.01885 | 10.22.22.22 | 172.16.55.5 | |
| 0.018982 | 10.22.22.22 | 172.16.55.5 | |
| 0.018986 | 172.16.55.5 | 10.22.22.22 | |
| 0.018995 | 10.22.22.22 | 172.16.55.5 | |
| 0.018998 | 172.16.55.5 | 10.22.22.22 | |
| 0.01901 | 10.22.22.22 | 172.16.55.5 | |
| 0.019011 | 172.16.55.5 | 10.22.22.22 | |
| 0.019017 | 10.22.22.22 | 172.16.55.5 | |
| 0.019018 | 172.16.55.5 | 10.22.22.22 | |
| 0.019026 | 10.22.22.22 | 172.16.55.5 | |
| 0.019027 | 172.16.55.5 | 10.22.22.22 | |
| 0.019036 | 10.22.22.22 | 172.16.55.5 | |
| 0.019038 | 172.16.55.5 | 10.22.22.22 | |
| 0.019043 | 10.22.22.22 | 172.16.55.5 | 200 OK |
| 0.019044 | 172.16.55.5 | 10.22.22.22 | |
| 0.019203 | 172.16.55.5 | 10.22.22.22 | |
| 0.019209 | 10.22.22.22 | 172.16.55.5 | |
| 0.027165 | 192.168.3.3 | 10.22.22.22 | GET target.test / |
| 0.027211 | 10.22.22.22 | 192.168.3.3 | |
| 0.027593 | 192.168.3.3 | 10.22.22.22 | |
| 0.027963 | 192.168.3.3 | 10.22.22.22 | |
| 0.027984 | 10.22.22.22 | 192.168.3.3 | |
| 0.028197 | 192.168.3.3 | 10.22.22.22 | GET target.test /css/main.css |
| 0.028256 | 10.22.22.22 | 192.168.3.3 | |
| 0.028636 | 192.168.3.3 | 10.22.22.22 | |
| 0.029084 | 10.22.22.22 | 192.168.3.3 | |
| 0.029218 | 192.168.3.3 | 10.22.22.22 | GET target.test /img/logo.png |
| 0.02923 | 10.22.22.22 | 192.168.3.3 | |
| 0.030568 | 10.22.22.22 | 192.168.3.3 | 200 OK |
| 0.030994 | 10.22.22.22 | 192.168.3.3 | |
| 0.031166 | 10.22.22.22 | 192.168.3.3 | 200 OK |
| 0.031449 | 192.168.3.3 | 10.22.22.22 | |
| 0.03147 | 192.168.3.3 | | 10.22.22.22 |
| 0.032097 | 192.168.3.3 | | 10.22.22.22 |
| 0.0322 | 10.22.22.22 | | 192.168.3.3 |
| 0.032368 | 192.168.3.3 | | 10.22.22.22 |
| 0.032616 | 10.22.22.22 | | 192.168.3.3 |

In Table 1 the participants in the monitored network traffic are Client A under the IP address 172.16.55.5 , which represents a user targeted by a phishing attack, and the Client B with the IP address 192.168.3.3 representing another user not targeted by a phishing attack. Address 10.22.22.22 is the IP address of the target "target.test" , which can be a web shop or banking site, and 10.88.88.88 is the IP address of the phishing website "phishing.test" , which attempts to target the users and the web site of the target target.test.

Looking at the traffic to and from Client A, first the main phishing site phishing.test is requested from the phishing site' s web server. The phishing sites server responds with a web site code as shown in simplified form in Fig. 2 and Table 1. After the initial response by the phishing sites server, all related elements or assets of the web site are requested, some of which are hosted by the same server and some of which are hosted by the target website' s server target.test. The network flow to and from Client B, who genuinely addresses the target site, shows no such pattern

Looking at the requests and responses in the log of Table 1 in detail the following network traffic events can be observed:
1. At 0.001178 s a user with the IP address 172.16.55.5 (Client A) requests the web site with the IP address 10.88.88.88 (phishing.test).
2. At 0.018097 s the user with IP address 172.16.55.5 requests an asset (here: /css/main.css) of the website with the IP address 10.22.22.22 (target.test).
3. At 0.018837 s the user 172.16.55.5 addresses 10.22.22.22 to requests an asset (here: /img/logo.png).
4. At 0.027165 s another client with IP address 192.168.3.3 (Client B) accesses the web site with the IP address 10.22.22.22.
5. At 0.028197 s the user with IP address 192.168.3.3 requests an asset (here: /css/main.css) of the website with the IP address 10.22.22.22 .
6. At 0.029218 s the user with IP address 192.168.3.3 requests an asset (here: /img/logo.png) of the website with the IP address 10.22.22.22.

While backtracking the network flow of Client A from a call to a targeted website 10.22.22.22, it can be observed that Client A accessed a different web site 10.88.88.88 (phishing.test/login.html) only 0.017s before calling up assets from the targeted site. When backtracking the network flow from and to Client B, who also accessed the targeted site, no such call of a different site is observed within the logged time window. The sudden change of accessed sites makes the initial IP address suspicious and hence this IP address and/or URL can be added to the list of potential phishing site for further analysis.

Hence, from a network traffic' s point of view, all URLs of requests from one unique client that occur simultaneously with requests to a different web server not related to the phishing site' s server but to a different server (which in a phishing attack of the kind described above is a server related to the target web server target.test) are potential phishing candidates. As shown in the log of Table 1 the relevant requests and responses are typically within a time window of less than 1s or even less than 0.1 s.

The above example shows that using the steps of registering network traffic, for example in form of destination and targets in a time resolved manner of the web or IP calls from and to a single user destination, and detecting within the registered destination and targets a short uncorrelated call pattern the uncorrelated call pattern including one or more user calls to a website or websites not linked to the requested site following the response to a user call to a requested site can be used to automate the detection of phishing attacks.

A user or a website is identified in the network flow typically by its network address or terminal ID but other traffic address identification means such as HTTP Header Enrichment or X-USER-ID can also be used, if available.

The short call pattern can be characterized as being short in time, i.e. as within a predefined time window of preferably between 0.1 and 10 seconds or being short in the registered network traffic, i.e. with very few or no intermediate calls, preferably less than 5 or 3, between the calls forming part of the call pattern or both. To avoid be dependent on the latency of the network time can be measured as the time between receiving a response from a server, (which could be a phishing site) by a user and subsequent requests from that user. This time is not network dependent but only of the speed of the user side network or of the user's device if the monitoring is restricted to a single device. The detection system for the automated detection of phishing attacks can include a network traffic flow analyzer such as monitor 117 and correlator 118 operated to register network traffic, for example in form of destination and targets in a time resolved manner of the web or IP calls from and to a single user destination, and detecting within the registered destination and targets a short uncorrelated call pattern the uncorrelated call pattern including one or more user calls to a website or websites not linked to the requested site following the response to a user call to a requested site.

This above method allows to find phishing URLs that would seem to be legitimate and would not raise any suspicion when using other detection methods. It is even possible to detect a potential phishing server (identified by its IP address) when the traffic is SSL encrypted. If the server name identification extension is used during the SSL handshake, or if the corresponding DNS traffic is available, even the phishing website' s domain name could be identified.

In general, network traffic flow monitoring 117 and correlation 118 can be performed wherever a client network traffic can be monitored. This could be at a client' s computer (i.e. as a web browser extension or as part of a software firewall), within a client' s network (i.e. hardware firewall, router, or modem), or within an ISP' s network.

It is seen as an advantage of the above methods and systems to be capable of issuing a warning or blocking a suspicious website in real-time or quasi real-time, i.e. before the user can enter the information phished for. Therefor such a warning or blocking step can be part of the above described methods.

It should be further noted that the system or methods as described can operate with a known set of target web sites. The known web sites can then be specifically protected when observing the network flow. On the other hand it is also possible to monitor the network flow for the above described correlations or pattern without a specific knowledge of the target.

Whilst the above methods and systems are capable of detecting certain phishing attacks in a robust, fast and easy to implement manner, further aspects of the invention include the combination of the above methods and systems with conventional known methods and systems of detecting phishing attacks as described for example in the referenced publications, using for example a comparison against known phishing web sites or the analysis of other known hallmarks of phishing websites.

## Claims

1. A method for the automated detection of phishing attacks comprising monitoring network traffic events in a machine-readable log said events comprising network addresses of the requested and responding sites, said method comprising the steps of:
-- detecting within the logged network traffic events a sequence of network traffic events wherein such sequence includes:
an initial request from a network address to a first requested network address;
a first response to said initial request from said first requested network address at a time t0; and
a second request from said network address to a second requested network address at time t1>t0 or within a limited number of network
events; and
classifying said first requested network address as a potential phishing website when said second requested network address is not related to said first requested network address and time d=t1-t0 is smaller than a defined time D or if the limited number of network events is smaller than a defined limit N.

2. The method of claim 1, wherein defined limit N is 5or 3.

3. The method of claim 1, wherein the defined time D is smaller than a typical time lapse between a change from one requested network address to another when such change is initiated by a human user.

4. The method of claim 3, wherein the defined time D is smaller than 1 second, preferably smaller than 0.1 seconds.

5. The method of any of the preceding claims wherein the steps are performed within a web browser or an extension of the web browser as used by a user to access websites.

6. The method of any of claims 1 to 4 wherein the steps are performed within a network used by a user to access websites.

7. A system (10) for the automated detection of phishing attacks comprising a network traffic monitor (117) generating a log of network traffic events in a machine readable log format and a network flow correlator (118) for detecting within the logged network traffic events a sequence of network traffic events wherein such sequence includes:
- an initial request from a network address to a first requested network address;
- a first response to said initial request from said first requested network address at a time t0; and
- a second request from said network address to a second requested network address at time t1>t0 or within a limited number of network events; and classifying said first requested network address as a potential phishing website when said second requested network address is not related to said first requested network address and time d=t1-t0 is smaller than a defined time D or if the limited number of network events is smaller than a defined limit N.

8. The system of claim 7 comprising a browser such that monitoring the network traffic is performed through the browser.

9. The system of claim 7 being part of a router or network gateway such that monitoring the network traffic is performed through the router or gateway.

## Patentansprüche

1. Verfahren zur automatischen Erkennung von Phishing-Attacken, umfassend Aufzeichnen von Ereignissen im Netzwerkverkehr in einem maschinenlesbaren Protokoll, wobei die Ereignisse Netzwerkadressen der angefragten und antwortenden Seiten umfassen, wobei das Verfahren die Schritte umfasst:
- Erkennen einer Sequenz von Ereignissen im Netzwerkverkehr innerhalb der protokollierten Ereignisse im Netzwerkverkehr, wobei die Sequenz beinhaltet:
eine erste Anfrage von einer Netzwerkadresse an eine erste angefragte Netzwerkadresse;
eine erste Antwort auf die erste Anfrage von der ersten angefragten Netzwerkadresse zum Zeitpunkt t0; und
eine zweite Anfrage von der Netzwerkadresse an eine zweite angefragte Netzwerkadresse zu einer Zeit t1 > t0 oder innerhalb einer begrenzten Anzahl von Netzwerkereignissen; und
- Klassifizieren der ersten angefragten Netzwerkadresse als eine potentielle Phishing Webseite, wenn die zweite angefragte Netzwerkadresse nicht zu der ersten angefragten Netzwerkadresse in Beziehung steht und die Zeit d = t1 - t0 kleiner ist als eine definierte Zeit D oder wenn die begrenzte Anzahl von Netzwerkereignissen kleiner ist als eine definierte Grenze N.

2. Verfahren gemäss Anspruch 1, wobei die Grenze N definiert ist als 5 oder 3.

3. Verfahren nach Anspruch 1, wobei die definierte Zeit D kleiner ist als eine Zeit, welche typischerweise zwischen einem Wechsel von einer angefragten Netzwerkadresse zu einer anderen vergeht, wenn der Wechsel von einem menschlichen Benutzer initiiert ist.

4. Verfahren nach Anspruch 3, wobei die definierte Zeit D kleiner ist als 1 Sekunde, vorzugsweise kleiner als 0,1 Sekunden.

5. Verfahren nach einem der vorhergehenden Ansprüche, wobei die Schritte innerhalb eines Webbrowsers oder einer Erweiterung des Webbrowsers erfolgt, wie von einem Benutzer beim Zugang zu Webseiten verwendet.

6. Verfahren nach einem der Ansprüche 1 bis 4, wobei die Schritte innerhalb eines Netzwerks erfolgen, welches von einem Benutzer zum Zugang zu Webseiten verwendet wird.

7. System (10) für eine automatische Erkennung von Phishing Attacken, umfassend einen Netzwerkverkehr-Monitor (117), welcher ein Protokoll von Ereignissen des Netzwerkverkehrs in einem maschinenlesbaren Protokollformat erstellt, und einen Korrelator für einen Netzwerkstrom (118), um innerhalb der protokollierten Ereignisse des Netzwerkverkehrs eine Sequenz von Ereignissen im Netzwerkverkehr zu detektieren, wobei die Sequenz beinhaltet:
- eine erste Anfrage von einer Netzwerkadresse an eine erste angefragte Netzwerkadresse;
- eine erste Antwort auf die erste Anfrage von der ersten angefragten Netzwerkadresse zu einer Zeit t0; und
- eine zweite Anfrage von der Netzwerkadresse an eine zweite angefragte Netzwerkadresse zu einer Zeit t1 > t0 oder innerhalb einer begrenzten Anzahl an Netzwerkereignissen; und Klassifizieren der ersten angefragten Netzwerkadresse als eine potentielle Phishing Webseite, wenn die zweite angefragte Netzwerkadresse nicht in Beziehung zu der ersten angefragten Netzwerkadresse steht und die Zeit d = t1 - t0 kleiner ist als eine definierte Zeit D oder wenn die begrenzte Anzahl von Netzwerkereignissen kleiner ist als eine definierte Grenze N.

8. System nach Anspruch 7, umfassend einen Browser, so dass Aufzeichnen des Netzwerkverkehrs von dem Browser durchgeführt wird.

9. System nach Anspruch 7 als Teil eines Routers oder Netzwerkzugangs, so dass Aufzeichnen des Netzwerkverkehrs von dem Router oder Zugang durchgeführt wird.

## Revendications

1. Procédé pour la détection automatisée d'attaques de hameçonnage comprenant la surveillance d'événements de trafic réseau dans un journal lisible par machine, lesdits événements comprenant des adresses réseau des sites demandés et des sites de réponse, ledit procédé comprenant les étapes de :
- détection, au sein des événements de trafic réseau enregistrés, d'une séquence d'événements de trafic réseau, une telle séquence incluant :
une requête initiale depuis une adresse réseau vers une première adresse réseau requise ;
une première réponse à ladite requête initiale depuis ladite première adresse réseau requise à un moment t0 ; et
une deuxième requête depuis ladite adresse réseau vers une deuxième adresse réseau requise au moment t1>t0 ou au sein d'un nombre limité d'événements de réseau ; et
- classification de ladite première adresse réseau requise comme un potentiel site internet de hameçonnage lorsque ladite deuxième adresse réseau requise n'est pas liée à ladite première adresse réseau requise et la durée d=t1-t0 est plus petit qu'une durée définie D ou si le nombre limité d'événements réseau est plus petit qu'une limite définie N.

2. Procédé selon la revendication 1, dans lequel la limite définie N est égale à 5 ou 3.

3. Procédé selon la revendication 1, dans lequel la durée définie D est plus petite qu'un délai typique entre un changement depuis une adresse réseau requise à une autre lorsqu'un tel changement est initié par un utilisateur humain.

4. Procédé selon la revendication 3, dans lequel la durée définie D est plus petite qu'une seconde, de préférence plus petite que 0.1 seconde.

5. Procédé selon l'une des revendications précédentes dans lequel les étapes sont effectuées sur un navigateur internet ou une extension du navigateur internet tels que celui ou celle qu'un utilisateur utilise pour accéder à ces sites Internet.

6. Procédé selon l'une des revendications 1 à 4 dans lequel les étapes sont effectuées au sein d'un réseau utilisé par un utilisateur pour accéder à des sites Internet.

7. Système (10) pour la détection automatisée d'attaques de hameçonnage comprenant une surveillance du trafic réseau (117) générant un journal de trafic réseau dans un format de journal lisible par machine et un corrélateur de flux de réseau (118) pour détecter, au sein des événements de trafic réseau enregistrés, une séquence d'événements de trafic réseau, une telle séquence incluant :
- une requête initiale depuis une adresse réseau vers une première adresse réseau requise;
- une première réponse à ladite requête initiale depuis ladite première adresse réseau requise à un moment t0; et
- une deuxième requête depuis ladite adresse réseau vers une deuxième adresse réseau requise au moment t1>t0 ou au sein d'un nombre limité d'événements réseau ; et la classification de ladite première adresse réseau requise en tant que site internet de hameçonnage potentiel lorsque ladite deuxième adresse réseau requise n'est pas liée à ladite première adresse réseau requise et la durée d=t1-t0 est plus petite qu'une durée définie D ou si le nombre limité d'événements de réseau est plus petit qu'une limite définie N.

8. Le système de la revendication 7 comprenant un navigateur tel que la surveillance du trafic sur le réseau soit réalisée par l'intermédiaire du navigateur.

9. Le système de la revendication 7 faisant partie d'un routeur ou d'une passerelle de réseau de telle sorte que la surveillance du trafic réseau soit réalisée par le routeur ou la passerelle.
